# EUROPEAN PATENT APPLICATION

(11) **EP 1 080 881 A2**
(43) Date of publication of application: **07.03.2001**
(21) Application number: 00118319.3
(22) Date of filing: 23.08.2000
(51) Int. Cl.: B32B 27/32

(54) **Easily-peelable film**

(30) Priority: 01.09.1999 JP 24721299
(71) Applicant: Sumitomo Chemical Company, Limited, Chuo-ku Osaka 541-8550 (JP)
(72) Inventor: Takagi, Yasuyuki, Ibaraki-shi, Osaka (JP); Takahata, Hiroaki, Toyonaka-shi, Osaka (JP)
(74) Representative: Kuhnen & Wacker

(57) **Abstract**

The present invention provides a film comprising a substrate and a sealant layer, wherein the sealant layer comprises a resin composition comprising a thermoplastic resin and fine particles having an average particle diameter of from 0.05µm to 20µm and having a function of easily-peelability and the like.

## Description

### BACKGROUND OF THE INVENTION

### 1. Field of the Invention

The present invention relates to easily-peelable films, and to packages and the like using the easily-peelable films.

### 2. Description of the Related Art

Easily-peelable films (i.e. films having a function of easily-peelability) having a sealant layer composed of thermoplastic resin have heretofore been used for various applications and also have been used widely as packaging materials.

Such easily-peelable films have been used as various packages, for example, bag-like containers, or as lids of cup-like, bowl-like or box-like containers made of plastics, paper or the like. These packages must be able to be sealed with proper adhesive strength (peel strength) and are also required not to peel unless force is artificially applied but to be able to be peeled easily by hand. Particularly in the cases of lids of cup-like, bowl-like or box-like containers, it is necessary that they can be easily peeled off from containers and also that resins of their sealant layers cause no stringiness at the time of peeling.

As a packaging material having a function of easily-peelability, Japanese Patent Publication (examined) No. Hei 5-82296 proposes a laminate comprising a sealant layer comprising a blend of polypropylene resin and low density polyethylene and a layer of polypropylene. This laminate, however, may cause stringiness of the resin of the sealant layer at the time of peeling and the condition of the peeling marks is not necessarily good.

### SUMMARY OF THE INVENTION

The object of the present invention is to provide, for example, an easily-peelable film which forms no stringiness of the resin of the sealant layer at the time of peeling and can form beautiful peeling marks.

Under such circumstances, the present inventors have found, after their intensive studies for overcoming the above-mentioned problems, that a film comprising a substrate and a sealant layer wherein the sealant layer comprises a resin composition comprising a thermoplastic resin and fine particles with a specific average particle diameter can solve the aforementioned problems, and they have arrived at the present invention.

That is, the present invention provides
1. a film comprising a substrate and a sealant layer, wherein the sealant layer comprises a resin composition comprising a thermoplastic resin and fine particles having an average particle diameter of from 0.05 µm to 20 µm and having a function of easily-peelability. The easily-peelable film having such a composition is well controlled the stringiness of the resin of the sealant layer at the time of peeling and can form beautiful peeling marks (Hereinafter, it is often referred to as the easily-peelable film of the present invention.),
2. the film according to the above 1, wherein the thickness of the sealant layer is from 1 µm to 50 µm,
3. the film according to the above 1, wherein the thickness of the film is from 10 µm to 100 µm,
4. the film according to the above 1, wherein the thermoplastic resin comprises a propylene-based resin and a thermoplastic resin other than the propylene-based resin,
5. the film according to the above 1, wherein the thermoplastic resin comprises a propylene-based resin and an ethylene-based resin wherein the ratio by weight of the ethylene-based resin to the propylene-based resin is from 10/90 to 50/50,
6. the film according to the above 1, wherein the resin composition contains from 0.5 to 25 parts by weight of the fine particles per 100 parts by weight of the thermoplastic resin,
7. the film according to the above 1, wherein the resin composition comprises from 50 to 89.5% by weight of propylene-based resin, from 10 to 49.5% by weight of ethylene-based resin and from 0.5 to 10% by weight of the fine particles,
8. the film according to any one of the above 1 to 7, wherein the fine particles are cross-linked macromolecular beads,
9. a package comprising the film according to any one of the above 1 to 8,
10. a method for producing a film, comprising preparing a resin composition comprising a thermoplastic resin and fine particles having an average particle diameter of from 0.05 µm to 20 µm, and laminating a sealant layer composed of the resin composition and a substrate for imparting easily-peelability to said film,
11. a method for imparting easily-peelability to a film comprising a substrate and a sealant layer, comprising letting the thermoplastic resin forming the sealant layer contain fine particles having an average particle diameter of from 0.05 µm to 20 µm, and
12. use of fine particles having an average particle diameter of from 0.05 µm to 20 µm for preventing stringiness of the resin of a sealant layer at the time of peeling.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step.

### DETAILED DESCRIPTION OF THE PREFERRED EMBODIMENTS

The easily-peelable film of the present invention comprises a substrate and a sealant layer and the sealant layer is composed of a resin composition comprising a thermoplastic resin and fine particles having an average particle diameter of from 0.05 µm to 20 µm. Since the easily-peelable film of the present invention has the sealant layer having the aforementioned composition, the resin of the sealant layer is well prevented from causing stringiness at the time of peeling and beautiful peeling marks can be formed. In the present specification, the "stringiness of the resin of the sealant layer" refers to a phenomenon in which when a easily-peelable film, whose sealant layer has been stuck to an article, is peeled off from the article, the resin forming the sealant layer stretches like thread.

In the easily-peelable film of the present invention, the sealant layer is a surface layer of the film and serves for adhering the film to itself or to an article such as a container. When the sealant layer contains fine particles having an average particle diameter of from 0. 05 µm to 20 µm, the resin of the sealant layer can be prevented from stringiness at the time of peeling. Fine particles having average diameters of smaller than 0.05 µm are liable to agglomerate and the effect to prevent stringiness may be deteriorated. When the average particle diameter exceeds 20 µm, the smoothness of the film is damaged and the easily-peelable film becomes difficult to adhere to itself or to articles. The average particle diameter of the fine particles is preferably from 0. 1 µm to 15 µm. The average particle diameters of the fine particles in the present invention are number average particle diameters determined by means of a particle size distribution meter utilizing a light scattering method.

The content of the fine particles in the resin composition forming the sealant layer is preferably from 0.5 to 25 parts by weight, more preferably from 0.5 to 11 parts by weight, with respect to 100 parts by weight of the thermoplastic resin.

The material of the fine particles may be either organic or inorganic substances. It may be, but is not limited to, carbon black, hydrated silicic acid anhydride, calcium carbonate, magnesium carbonate, aluminum carbonate, titanium oxide, mica, wood flour, cross-linked macromolecular beads (for example, cross-linked poly(methyl methacrylate) beads and cross-linked polystyrene beads), and the like. Among these substances, the cross-linked macromolecular beads are preferred.

Examples of the thermoplastic resin which forms the sealant layer include thermoplastic resins belong to the ethylene-based resin, the propylene-based resin, the styrene-based resin and the vinyl-based resin. The sealant layer may contain two or more kinds of thermoplastic resins. Particularly, from the viewpoint of peelability, the use of a propylene-based resin in combination with another thermoplastic resin is preferable. In this case, the ratio in weight of the thermoplastic resin other than the propylene-based resin (for example, an ethylene-based resin) to the propylene-based resin is preferably from 10/90 to 50/50, more preferably from 15/85 to 45/55.

The content of the thermoplastic resin in the resin composition for forming the sealant layer is preferably from 80 to 99.5% by weight, more preferably from 90 to 99.5% by weight.

Examples of the propylene-based resin include propylene copolymers such as propylene/α-olefin block copolymers and propylene/α-olefin olefin random copolymers in addition to propylene homopolymers. Two or more kinds of propylene-based resins may be used together. Examples of the α-olefin in the propylene/α-olefin block copolymers and the propylene/α-olefin olefin random copolymers include α-olefins having 2 or from 4 to 10 carbon atoms such as ethylene, butene-1 and octene-1 in view of peelability and heat resistance. Of the propylene-based resins, the propylene homopolymers and propylene/α-olefin olefin random copolymers with α-olefin unit contents of no more than 50% by weight are preferred.

The thermoplastic resin used together with the propylene-based resin is not necessarily limited to ethylene-based resins, styrene-based resins or vinyl-based resins, but the ethylene-based resins are preferred. Examples of the ethylene-based resins include polyethylenes such as low density polyethylenes and high density polyethylenes, ethylene/α-olefin copolymers such as ethylene/butene-1 copolymers and ethylene/hexene-1 copolymers, and ethylene copolymers comprising repeat units derived from at least one kind of vinyl monomer and repeat units derived from ethylene such as ethylene/methyl methacrylate copolymers and ethylene/vinyl acetate copolymers. Two or more kinds of ethylene-based resins may be used together. Polyethylenes with densities of no less than 0.930 are preferably used in view of peelability and production costs.

Examples of the α-olefins in the ethylene/α-olefin copolymers include α-olefins having from 3 to 10 carbon atoms such as propylene, butene-1, hexene-1, 4-methylpentene-1, heptene-1, octene-1 and decene-1. Examples of the vinyl monomer units in the foregoing ethylene-based copolymers include unsaturated carboxylic acids such as acrylic acid and methacrylic acid, unsaturated carboxylic acid esters such as ethyl acrylate, methyl acrylate and ethyl methacrylate, unsaturated carboxylic anhydrides such as maleic anhydride.

When the sealant layer comprises a propylene-based resin, an ethylene-based resin and fine particles, it preferably comprises from 50 to 89.5% by weight of the propylene-based resin, from 10 to 49.5% by weight of the ethylene-based resin and from 0.5 to 10% by weight of the fine particles. When the resin composition contains these ingredients in the above proportion, the easily-peelable film of the present invention can show proper peel strength and can form very beautiful peeling marks.

The resin composition for forming the sealant layer may be prepared by means of an apparatus such as a single screw extruder, a double screw extruder, a Banbury mixer, a kneading roll, a Brabender plastograph and a kneader. Moreover, the resin composition may optionally contain various additives such as antioxidants, antistatic agents, antiblocking agents, lubricants, anti-clouding agents, stabilizers, nucleating agents and colorants.

The sealant layer in the easily-peelable film of the present invention usually has a thickness of from 1 to 50 µm, preferably from 5 to 20 µm. When the thickness of the sealant layer is less than 1 µm, peel strength may be too great. When the thickness of the sealant layer exceeds 50 µm, the effects shown by the incorporation of the fine particles may be reduced. As a result, the resin of the sealant layer may cause stringiness and beautiful peeling marks may not be formed.

In the present invention, the substrate is a part other than the surface layer, the sealant layer, of the easily-peelable film of the present invention. The substrate may comprise either a single layer or two or more layers laminated. The material of the layer forming the substrate may be paper, resin (for example, polyethylene, polypropylene, polyester and nylon), metal foil and the like. The resin may be oriented. In most cases, the substrate is composed of a layer for securing mechanical strength of an easily-peelable film and various layers having intrinsic functions (for example, a gas barrier layer, a shading layer and an adhesive layer) which are provided according to demand. One layer may have two or more functions.

The easily-peelable film of the present invention has no particular limit in its thickness, but usually is from 10 µm to 100 µm thick.

The easily-peelable film of the present invention may be produced by conventional processing methods such as an inflation method, a T-die method and a press method. Alternatively, it may also be produced by laminating a plurality of previously-prepared films by a dry or sandwich lamination method using a two-component reactive adhesive or the like.

The easily-peelable film of the present invention can show a proper peel strength against the film itself or articles such as polypropylene sheets. Packages can be obtained by using the film. Such packages include, but are not limited to, lids for sealing the opening of a cup-like, bowl-like or box-like container as one example and a packaging bag formed by sticking the sealant layers of the easily-peelable film(s) together as another example.

As described above in detail, since the easily-peelable film of the present invention has a sealant layer of a resin composition comprising thermoplastic resin and fine particles having an average particle diameter of from 0.05 µm to 20 µm, it can prevent the resin of the sealant layer from causing stringiness and can form beautiful peeling marks.

### Examples

The present invention will be further described based on the following examples, but the invention is not limited to the examples.

### Example 1

A laminated film comprising a sealant layer and an olefin-based resin layer was first produced in the following manner. For the sealant layer was used a resin composition prepared by melt kneading 69 parts by weight of an ethylene/propylene copolymer [melt flow rate (230°C, 21.18 N)=3.5 g/10 minutes; ethylene units content=3.7% by weight], 30 parts by weight of a high density polyethylene [melt flow rate (190°C, 21.18 N)=2 g/10 minutes] and 1 part by weight of talc (manufactured by Hayashi Chemical Co., average particle diameter=2.8 µm). As an olefin-based resin for the olefin-based resin was used a homopolypropylene [melt flow rate (230°C, 21.18 N)=2 g/10 minutes]. Using a cast film producing apparatus (a co-extrusion T-die), the resin composition for the sealant layer and the resin for the olefin-based resin layer were extruded at extrusion temperatures of 240°C and 260°C, respectively, and the two layers were then laminated. The extruded film was taken up at conditions; a take-up rate of 15 m/minute and a cooling roll temperature of 25°C, and the surface of the olefin-based resin layer was subjected to corona discharge treatment so that its wetted tension became 45 dyne/cm, yielding a laminated film. The resulting laminated film had a 5-µm thick sealant layer and had a total thickness of 35 µm.

A single layer film of nylon (trade name: ON-RT; manufactured by Unitika, Ltd.; thickness=25 µm) was further dry laminated on the olefin-based resin layer of the laminated film, yielding a final film. The dry lamination was carried out in the following manner using a bench test coater manufactured by Yasui Seiki Co., Ltd.; an aromatic ester-based anchor coating agent was applied to one side of the single layer film of nylon in an application amount of 2 g/m² and the applied surface was pressed onto the olefin-based resin layer of the laminated film at a temperature of 40°C and a pressure of 3 kg/cm² and then aged on heat in a dryer at 40°C for 48 hours. As the aromatic ester-based anchor coating agent was used one prepared by completely mixing 12 parts by weight of "Takelac A310" (trade name) manufactured by Takeda Chemical Industries, Ltd., 1 part by weight of "Takenate A3" (trade name) manufactured by Takeda Chemical Industries, Ltd. and 32 parts by weight of ethyl acetate.

The resulting final film was subjected to a peeling test. Evaluation results are shown in Table 1.

### Example 2

A final film was produced in the same manner as Example 1 except that the resin composition for a sealant layer was changed to a resin composition prepared by melt kneading 70 parts by weight of a propylene/ethylene/butene-1 copolymer [melt flow rate (230°C, 21.18 N)=8 g/10 minutes; ethylene units content=2% by weight; butene-1 units content=15% by weight], 20 parts by weight of a low density polyethylene [melt flow rate (190°C, 21.18 N)=8 g/10 minutes], 9 parts by weight of a linear low density polyethylene [melt flow rate (190°C, 21.18 N)=2 g/10 minutes] and 1 part by weight of cross-linked poly(methyl methacrylate) beads (average particle diameter=10 µm) and that the thickness of a sealant layer was set to be 10 µm. Results of the peeling test of the final film are shown in Table 1.

### Comparative Example 1

A final film was produced in the same manner as Example 1 except that the resin composition for a sealant layer was changed to a resin composition prepared by melt kneading 70 parts by weight of an ethylene/propylene copolymer [melt flow rate (230°C, 21.18 N)=3.5 g/10 minutes; ethylene units content=3.7% by weight] and 30 parts by weight of a high density polyethylene [melt flow rate (190°C, 21.18 N)=2 g/10 minutes]. The film was subjected to the peeling test. The evaluation results are shown in Table 1.

### Comparative Example 2

A final film was produced in the same manner as Example 2 except that the resin composition for a sealant layer was changed to a resin composition prepared by melt kneading 70 parts by weight of a propylene/ethylene/butene-1 copolymer [melt flow rate (230°C, 21.18 N)=8 g/10 minutes; ethylene units content=2% by weight; butene-1 units content=15% by weight], 20 parts by weight of a low density polyethylene [melt flow rate (190°C, 21.18 N)=8 g/10 minutes] and 10 parts by weight of a linear low density polyethylene [melt flow rate (190°C, 21.18 N)=2 g/10 minutes]. The film was subjected to the peeling test. The evaluation results are shown in Table 1.

The following are the method of the peeling test for the final films in the Examples and the Comparative Examples.

### (1) Peel strength

A final film (test film) cut in a size of 90 mm by 90 mm was put on a 300-µm thick polypropylene sheet cut in a size of 90 mm by 90 mm and heat-sealed over a 20-mm width under the conditions; a predetermined temperature of 160°C, 170°C or 180°C, a pressure of 2 kg/cm², a time period of 1 second. For a specimen cut off from the heat-sealed part 15 mm in width and 20 mm in length, the final film was peeled off from the polypropylene sheet at a peeling speed of 300 mm/minute and peel strength was measured by means of a tensile tester (Model AGS-500D manufactured by Shimadzu Corp.). The polypropylene sheet was prepared by means of a cast processor from the polypropylene "Noblene FS2011D" (trade name) manufactured by Sumitomo Chemical Co. Ltd.

When a final film has a peel strength of less than 0.3 kg/15 mm-width, the film has poor adhesive properties. When a final film has a peel strength of not less than 0.3 kg/15 mm-width and not greater than 3 kg/15 mm-width, the film combines moderate adhesive properties and easily-peelability. When peel strength exceeds 3 kg/15 mm-width, a final film is poor in easily-peelability.

### (2) Conditions of peeling marks

After the measurement of peel strength, the peeling mark of the final film peeled from the polypropylene sheet was observed visually and the condition of the peeling mark was evaluated according to the following criteria:
ⓞ: No stringiness of resin was observed and the condition of the peeling marks was very good.
○: Little stringiness of resin was observed and the condition of the peeling marks was good.
△: Stringiness of resin was observed and the condition of the peeling marks was a little poor.
X: Significant stringiness of resin was observed and the condition of the peeling marks was poor.

**Table 1**

| | Fine particles | | Peel strength (kg/15 mm-width)/Condition of peeling marks | | |
|---|---|---|---|---|---|
| | Kind | Average particle diameter (µm) | 160°C | 170°C | 180°C |
| Example 1 | Talc | 2.8 | 1.42/○ | - | 1.64/○ |
| Example 2 | Cross-linked poly(methyl methacrylate)beads | 10 | - | 1.39/ⓞ | 1.58/ⓞ |
| Comparative Example 1 | - | - | 1.50/△ | - | 1.68/X |
| Comparative Example 2 | - | - | - | 1.52/X | 1.68/△ |

## Claims

1. A film comprising a substrate and a sealant layer, wherein the sealant layer comprises a resin composition comprising a thermoplastic resin and fine particles having an average particle diameter of from 0.05 µm to 20 µm and having a function of easily-peelability.

2. The film according to claim 1, wherein the thickness of the sealant layer is from 1 µm to 50 µm.

3. The film according to claim 1, wherein the thickness of the film is from 10 µm to 100 µm.

4. The film according to claim 1, wherein the thermoplastic resin comprises a propylene-based resin and a thermoplastic resin other than the propylene-based resin.

5. The film according to claim 1, wherein the thermoplastic resin comprises a propylene-based resin and an ethylene-based resin wherein the ratio by weight of the ethylene-based resin to the propylene-based resin is from 10/90 to 50/50.

6. The film according to claim 1, wherein the resin composition contains from 0.5 to 25 parts by weight of the fine particles per 100 parts by weight of the thermoplastic resin.

7. The film according to claim 1, wherein the resin composition comprises from 50 to 89.5% by weight of propylene-based resin, from 10 to 49.5% by weight of ethylene-based resin and from 0.5 to 10% by weight of the fine particles.

8. The film according to any one of claims 1 to 7, wherein the fine particles are cross-linked macromolecular beads.

9. A package comprising the film according to any one of claims 1 to 8.

10. A method for producing a film, comprising preparing a resin composition comprising a thermoplastic resin and fine particles having an average particle diameter of from 0.05 µm to 20 µm, and laminating a sealant layer composed of the resin composition and a substrate for imparting easily-peelability to said film.

11. A method for imparting easily-peelability to a film comprising a substrate and a sealant layer, comprising letting the thermoplastic resin forming the sealant layer contain fine particles having an average particle diameter of from 0.05 µm to 20 µm.

12. Use of fine particles having an average particle diameter of from 0.05 µm to 20 µm for preventing stringiness of the resin of a sealant layer at the time of peeling.
